# FASCICULE DE BREVET EUROPEEN

(11) **EP 3 642 112 B1**
(45) Date de publication et mention de la délivrance du brevet: **27.10.2021**
(21) Numéro de dépôt: 17825153.4
(22) Date de dépôt: 12.12.2017
(51) Int. Cl.: B64D 27/26

(54) **ENSEMBLE DE MOTORISATION POUR UN AERONEF**
ANTRIEBSEINHEIT FÜR EIN FLUGZEUG
DRIVE UNIT FOR AN AIRCRAFT

(30) Priorité: 21.06.2017 FR 1755661
(43) Date de publication de la demande: 29.04.2020
(73) Titulaire: Airbus Operations (S.A.S.), 31060 Toulouse (FR)
(72) Inventeur: COMBES, Stéphane, 31660 Buzet sur Tarn (FR); SOULIE, Adeline, 82600 Verdun sur Garonne (FR); PAUTIS, Olivier, 31330 Merville (FR)
(74) Mandataire: Gicquel, Olivier Yves Gérard
(86) Numéro de dépôt international: PCT/EP2017/082327
(87) Numéro de publication internationale: WO 2018/233860

(56) Documents cités:
- EP-A1- 1 216 921
- EP-A2- 1 574 429
- EP-A2- 2 332 835
- FR-A1- 2 878 229
- FR-A1- 2 887 853
- FR-A1- 2 891 243
- FR-A1- 2 921 341
- US-A1- 2014 061 426

## Description

La présente invention concerne un ensemble de motorisation pour un aéronef, ledit ensemble comprenant un mât, une turbomachine ayant un moteur, une attache moteur avant et une attache moteur arrière pour attacher le moteur au mât.

Un aéronef comporte classiquement une aile sous laquelle est fixé un mât auquel est fixé un moteur via un système d'attaches moteur constitué entre autres à l'avant par une attache moteur avant et à l'arrière par une attache moteur arrière. L'ensemble constitué du mât et de son système d'attaches se situe radialement au-dessus du moteur, dans un secteur horaire que l'on peut définir entre 10h et 14h.

De manière connue, par exemple tel que décrit dans les documents EP2332835 WO2010/007226 ou encore US2014/0061426, l'attache moteur arrière se reprend sur le carter moteur, aussi appelé carter « core-turbine » en terminologie aéronautique et l'attache avant se reprend sur la virole extérieure du carter intermédiaire du moteur qui prolonge le carter de la soufflante du moteur.

Dans d'autres configurations propres aux moteurs de grands diamètres, par exemple tel que décrit dans le brevet FR2921341, l'attache avant se reprend sur le moyeu du carter intermédiaire du moteur, radialement plus proche de l'axe longitudinal du moteur que ne l'est la virole extérieure du carter intermédiaire, afin de respecter une contrainte de garde au sol.

L'invention vise à proposer une architecture alternative du système d'attaches moteur décrite dans le brevet FR2921341 .

A cet effet, l'invention concerne un ensemble de motorisation pour un aéronef tel que revendiqué dans la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une vue de côté d'un aéronef présentant un ensemble de motorisation selon l'invention,
- la figure 2 est une vue de côté d'une turbomachine de l'ensemble de motorisation représenté à la figure 1 selon un mode de réalisation de l'invention,
- la figure 3 est une vue de côté du mât et du moteur de la turbomachine de l'ensemble de motorisation représenté à la figure 2 selon un mode de réalisation de l'invention,
- la figure 4 est une vue en perspective d'une attache moteur avant de l'ensemble de motorisation selon l'invention, et
- la figure 5 est une vue éclatée et en perspective d'une attache moteur arrière de l'ensemble de motorisation selon l'invention.

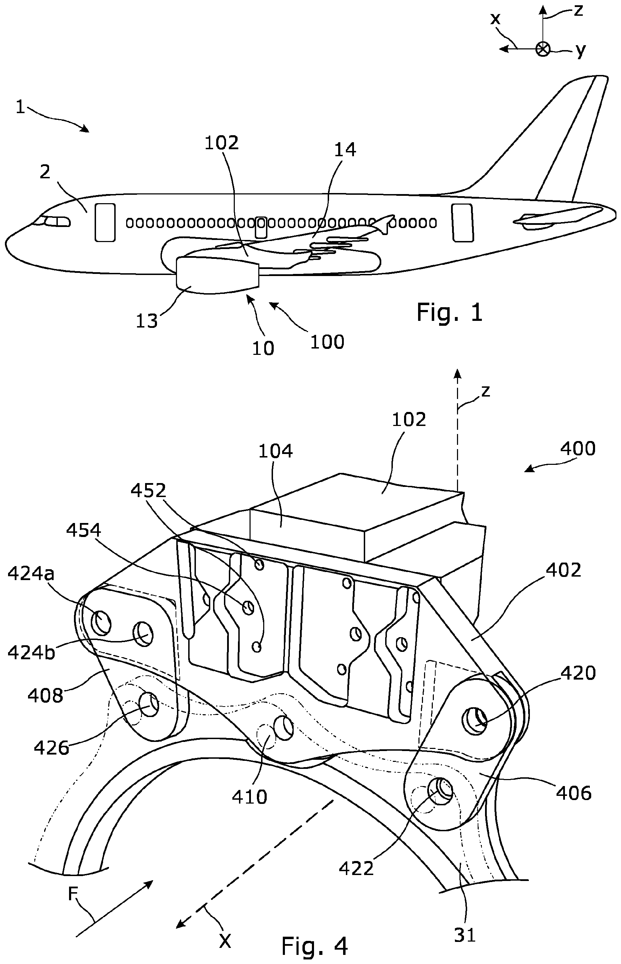

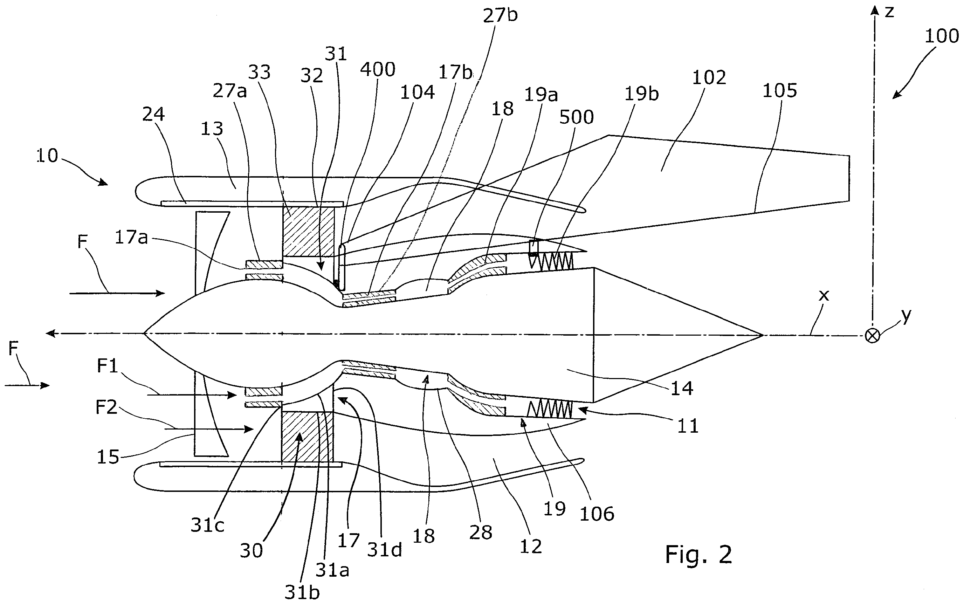

En relation avec les figures 1 et 2, un aéronef 1 comporte un fuselage 2 auquel sont attachées deux ailes 14, de part et d'autre du fuselage 2. Sous chaque aile 14 est fixé au moins un ensemble de motorisation 100 qui comporte un mât 102 fixé sous l'aile 14 et une turbomachine 10 à double flux comportant une nacelle 13 de forme cylindrique qui entoure un moteur 14 fixé au mât et une soufflante 15 entrainée par le moteur 14.

Le mât 102 présente une face avant 204 qui est globalement perpendiculaire à l'axe longitudinal X de la turbomachine 10 et orientée vers l'avant de l'aéronef 1, et une face inférieure 105 qui est globalement horizontale (c'est-à-dire selon l'axe longitudinal X) et orientée vers le sol.

En fonctionnement de la turbomachine 10, une masse d'air est aspirée puis expulsée par la soufflante 15. La masse d'air est divisée, d'amont en aval selon une direction d'un flux d'air F traversant la turbomachine 10 et sensiblement parallèle à l'axe longitudinal X, en un flux primaire F1, qui circule dans une veine d'air primaire 11, et en un flux secondaire F2, qui est concentrique avec le flux primaire F1 et circule dans une veine d'air secondaire 12, où conduit de soufflante. Les deux veines sont séparées par une interveine 106.

Le flux primaire F1 traverse d'amont en aval, les différents éléments du moteur 14, à savoir un étage de compresseurs 17, comprenant par exemple un compresseur basse pression 17a et un compresseur haute pression 17b en aval du compresseur basse pression, une chambre de combustion 18, un étage de turbines 19, comprenant par exemple une turbine haute pression 19a et une turbine basse pression 19b en aval de la turbine haute pression.

Des carters structuraux sont montés autour des éléments de la turbomachine et permettent de la rigidifier afin notamment de limiter ses distorsions en fonctionnement.

Ainsi la soufflante 15 est carénée par un carter de soufflante 24 (carter fan en terminologie anglo-saxonne) et les éléments du moteur 14 sont entourés, d'amont en aval, par un carter de compresseur basse pression 27a qui entoure le compresseur basse pression 17a, une carter de compresseur haute pression 27b qui entoure le compresseur haute pression 17b, puis un carter moteur 28, dit carter « core-turbine » en langage aéronautique qui entoure la chambre de combustion 18 et les turbines haute pression et basse pression 19a,b.

La turbomachine 10 comprend en outre un carter intermédiaire 30 ayant une partie formant moyeu 31 et une virole extérieure cylindrique 32 radialement espacé du moyeu par la veine secondaire 12 et fixé au moyeu via des bras 33. Le moyeu 31 est en partie agencé entre le carter du compresseur basse pression 27a et le carter du compresseur haute pression 27b.

Le moyeu 31 comprend deux viroles annulaires coaxiales, respectivement interne 31a et intermédiaire 31b définissant un espace fermé en amont par un flasque transversal 31c amont qui relie les viroles interne 31a et intermédiaire 31b et en aval par un flasque transversal aval 31d qui relie les viroles interne 31a et intermédiaire 31b.

La virole extérieure 32 est située en aval et en continuée du carter de la soufflante 24 et prolonge ce dernier pour délimiter extérieurement la veine d'air secondaire 12 tandis que la virole intermédiaire 31b délimite intérieurement la veine d'air secondaire 12. La virole interne 31a délimite quant à elle extérieurement la veine d'air primaire 11. L'interveine 106 prolonge le moyeu 31.

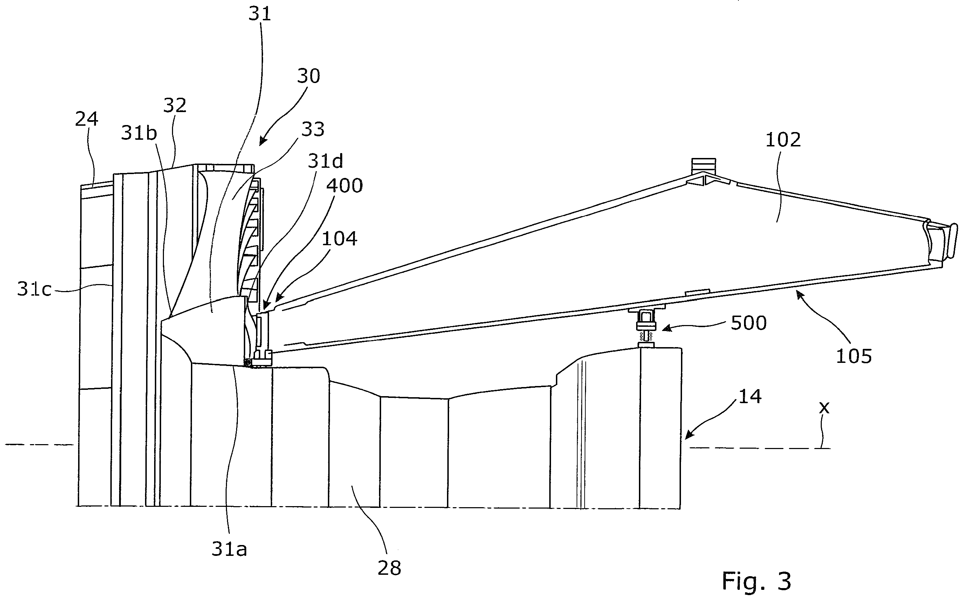

En relation avec les figures 3 à 5 (les organes du moteur ne sont pas représentés à la figure 3, seuls les carters structuraux sont représentés), la fixation du moteur 14 au mât 102 est assurée entre autre, à l'avant, par une attache moteur avant 400 et, à l'arrière, par une attache moteur arrière 500.

Selon l'invention, l'attache moteur avant 400 se fixe entre le mât 102 et le moyeu 31 du carter intermédiaire 30 et l'attache moteur arrière 500 se fixe entre le mât 102 et le carter moteur 28.

L'attache moteur avant 400 se fixe soit au flasque transversal aval 31d (comme représenté sur la figure 3) ou à la virole interne 31a (comme représenté sur la figure 2) du moyeu.

L'attache moteur avant 400 comporte :
- une poutre 402 qui se fixe à la face avant 104 du mât 102,
- une première biellette latérale 406 fixée par un point de liaison 420 à la poutre 402 et par un point de liaison 422 au moyeu 31 du carter intermédiaire, par exemple au flasque transversal aval 31d (dans l'exemple de la figure 3) ou à la virole interne 31a (dans l'exemple de la figure 2), et
- une deuxième biellette latérale 408 fixée par deux points de liaison 424a-b à la poutre 402 et par un point de liaison 426 au moyeu 31 du carter intermédiaire, par exemple au flasque transversal aval 31d (dans l'exemple de la figure 3) ou à la virole interne 31a (dans l'exemple de la figure 2).

Sur la figure 4, la partie du moyeu 31 qui est en amont de l'attache moteur avant 400 est représentée en transparence et en traits mixtes et pour des raisons de lisibilité, chaque biellette 406, 408 est montrée en traits pleins bien que certaines parties soient cachées.

Pour chaque biellette latérale 406, 408, chaque point de liaison à la poutre 402 et au moyeu 31 est constitué par une chape réalisée, respectivement dans la poutre 402 et le moyeu 31, par un alésage traversant la biellette latérale 406, 408 et par un axe de cisaillement simple qui traverse la chape et s'emmanche dans l'alésage de la biellette à travers une liaison rotule.

La position frontale de la poutre 402 sur le mât 102 permet d'intégrer la poutre 402 au moyeu 31 de l'ensemble de motorisation 100. La poutre 402 constitue alors une nervure avant du mât 102 et favorise une intégration compacte en diminuant l'encombrement vertical (en Z) et longitudinal (en X) de l'attache moteur avant 400 par rapport aux attaches moteurs avant de l'art antérieur qui sont fixées à la virole extérieure du carter intermédiaire.

L'attache moteur avant 400 et son installation particulière entre le mât 102 et le moyeu 31 permettent une reprise des efforts dans les directions Y et Z et du moment Mx (torsion autour de l'axe longitudinal X) au travers des deux biellettes 406 et 408 rotulées. En outre, l'attache moteur avant 400 permet le déplacement dans la direction X du moteur 14 relativement au mât 102 grâce aux rotules mises en place aux points de liaison des biellettes 406 et 408.

Ainsi, le chemin de transmission des efforts est plus direct par rapport à une installation de l'art antérieur puisque l'attache moteur avant selon l'invention ne reprend que des efforts contenus dans le plan de l'attache elle-même à savoir des efforts verticaux (selon Z), transverses (selon Y), ainsi que le moment Mx.

Pour une meilleure sécurité, l'attache moteur avant 400 comporte un point de liaison supplémentaire 410 entre la poutre 402 et le moyeu 31. Ce point de liaison supplémentaire 410 prend la forme d'un point de fixation de sécurité en attente (dit « fail-safe » en langue anglo-saxonne) qui permet un doublement des chemins d'effort afin de compenser une défaillance d'au moins une des biellettes 406 et 408. Ainsi l'attache moteur avant 400 intègre les chemins d'efforts principaux sollicités lors de cas d'utilisations dit 'nominaux' et les chemins d'efforts secondaires ou 'fail-safe' sollicités lors de cas d'utilisations dit 'panne' ou 'cassés' du chemin principal.

Ce point de liaison supplémentaire 410 est constitué par exemple d'une chape réalisée dans le moyeu 31 (par exemple dans le flasque transversal aval 31d) et d'un axe emmanché dans ladite chape et qui traverse un alésage de la poutre 402 dont le diamètre est supérieur au diamètre de l'axe. Ainsi, en fonctionnement normal, il n'y a aucun contact entre l'axe et la poutre 402, et en cas de rupture de l'une des biellettes 406 ou 408, le moyeu 31 va se déplacer et l'axe vient alors en contact avec la poutre 402.

La fixation de la poutre 402 au mât 102 s'effectue préférentiellement par deux ensembles de fixation répartis de part et d'autre d'un plan longitudinal de symétrie du mât 102 et comprenant chacun deux vis de traction 452 et un pion 454 où une vis de traction 452 est disposée en partie haute de la poutre 402, une vis de traction 452 est disposée en partie basse de la poutre 402 et le pion 454 est disposé entre les vis de traction 452.

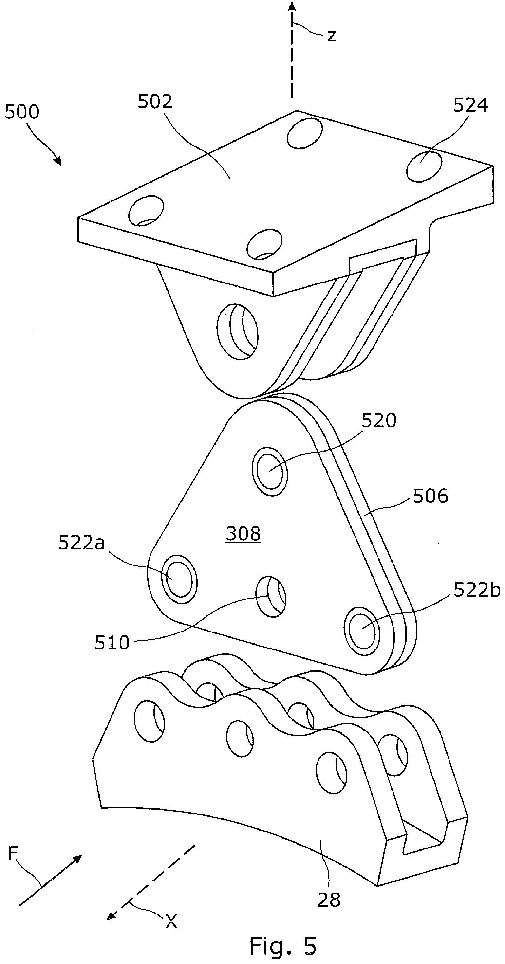

En relation avec la figure 5, l'attache moteur arrière 500 comporte :
- une ferrure 502 qui se fixe à la face inférieure 105 du mât 102,
- une biellette aval 506 fixée par un point de liaison 520 à la ferrure 502 et par deux points de liaison 522a-b au carter moteur 28, et
- une biellette amont 508 fixée par un point de liaison 520 à la ferrure 502 et par deux points de liaison 522a-b au carter moteur 28.

Chaque biellette 506, 508 présente ainsi trois points de liaison.

Pour chaque biellette 506, 508, le point de liaison 520 à la ferrure 502 est constitué par une chape réalisée dans la ferrure 502, par un alésage traversant chaque biellette 506, 508 et par un axe de cisaillement double qui traverse la chape et s'emmanche dans les alésages des biellettes 506 et 508 à travers une liaison rotule. L'axe double est constitué de deux axes emmanchés l'un dans l'autre : un axe plein intérieur inséré avec jeu dans un axe creux externe. En cas de rupture de l'axe externe, les efforts sont repris par l'axe interne restant.

Pour chaque biellette 506, 508, chaque point de liaison 522a-b au carter moteur 28 est constitué par une chape réalisée dans le carter moteur 28, par un alésage traversant chaque biellette 506, 508 et par un axe de cisaillement simple plein qui traverse la chape et s'emmanche dans les alésages à travers une liaison rotule. Les axes et les alésages présentent un ajustement serré, dit monté engagé.

Chaque biellette 506, 508 présente ainsi un alésage par point de liaison, c'est-à-dire ici trois alésages. Les deux biellettes 506 et 508 sont appliquées l'une contre l'autre où chaque alésage de la biellette aval 506 est aligné avec un alésage de la biellette amont 508.

L'attache moteur arrière 500 permet une reprise des efforts dans les directions Y et Z au travers des deux biellettes 506 et 508 rotulées. En outre, l'attache moteur arrière 500 permet le déplacement dans la direction X du moteur 14 relativement au mât 102 grâce aux rotules mises en place aux points de liaison des biellettes 506 et 508. La suppression de la reprise du moment Mx permet de réduire l'encombrement, notamment selon la direction Y, de l'attache moteur arrière 5000 par rapport à celle de l'état de la technique et donc de limiter la largeur des formes aérodynamiques autour de cette attache permettant ainsi d'améliorer la performance aérodynamique de l'aéronef 1.

Pour une meilleure sécurité, l'attache moteur arrière 500 comporte un point de liaison supplémentaire 510 entre les biellettes 506 et 508 et le carter moteur 28. Ce point de liaison supplémentaire 510 prend la forme d'un point de fixation de sécurité en attente (dit « fail-safe » en langue anglo-saxonne) qui compensera une défaillance d'un élément de l'attache moteur arrière 500.

Ce point de liaison supplémentaire 510 est constitué par exemple d'une chape réalisée dans le carter moteur 28 et d'un axe emmanché dans ladite chape et qui traverse un alésage commun aux deux biellettes 506 et 508 dont le diamètre est supérieur au diamètre de l'axe. Ainsi, en fonctionnement normal, il n'y a aucun contact entre l'axe et les biellettes 506 et 508, et en cas de problème, le carter structural 260 va se déplacer et l'axe vient alors en contact avec les biellettes 506 et 508.

La fixation de la ferrure 502 au mât 102 s'effectue préférentiellement par quatre vis de traction à travers des alésages 524 prévus à cet effet dans la ferrure 502.

Le rotulage des biellettes sur les axes est réalisé par exemple par la mise en place d'une sphère sur l'axe et par le fait que la biellette peut glisser autour de cette sphère.

Afin de reprendre les efforts de poussée selon la direction X, l'ensemble de motorisation 100 comporte de préférence deux bielles fixées entre le mât 102 et le carter structural 560, les bielles étant disposées de part et d'autre du plan de symétrie du mât 102.

On notera que contrairement aux attaches moteur de l'art antérieur dans lesquelles l'attache moteur arrière se reprend sur le carter moteur et l'attache moteur avant se reprend sur la virole extérieure du carter intermédiaire, l'invention présente des avantages en termes de masse et de reprises des efforts

En effet, les attaches moteur avant et arrière 400, 500 selon l'invention sont rapprochées en axial X et en radial Z impliquant de ce fait une chaine de côte plus courte (moins de pièces traversées par les efforts de reprises) ce qui réduit la déformation et les distorsions de la carcasse du moteur 14 en fonctionnement. Les performances du moteur 14 en sont améliorées puisque ce dernier peut être alors être conçu avec des tolérances réduites, notamment en ce qui concerne les éléments de compresseur et de turbine où les jeux entre l'extrémité des pales/aubes de ces éléments et les carters des pales/aubes peuvent être réduits. En outre, le moment de torsion Mx au niveau de l'attache moteur avant 400 est repris plus proche de l'axe moteur (bras de levier réduit) qu'il ne l'est pour les attaches moteur avant de l'art antérieur, et a ainsi une valeur absolue réduite. Ainsi, il n'est pas nécessaire, dans l'invention, d'adjoindre une structure additionnelle, de type berceau moteur, pour rigidifier le moteur 14.

## Revendications

1. Ensemble de motorisation (100) pour un aéronef (1), ledit ensemble de motorisation (100) comportant :
- un mât (102) s'étendant selon un axe longitudinal (X) et destiné à être fixé sous une aile (14) de l'aéronef (1) et présentant une face avant (104) qui est globalement perpendiculaire à l'axe (X) et orientée vers l'avant de l'aéronef et une face inférieure (105), et
- une turbomachine (10) comprenant d'amont en aval selon une direction (F) d'un flux d'air traversant la turbomachine en fonctionnement de cette dernière, une soufflante (15) et un moteur (14) entrainant la soufflante, la soufflante (15) étant carénée par un carter de soufflante (24) et le moteur (14) étant caréné, d'amont en aval, par un carter intermédiaire (30) et un carter moteur (28), le carter intermédiaire (30) ayant un moyeu (31) et une virole extérieure (32) prolongeant le carter de soufflante (24), ladite virole (32) étant espacée radialement du moyeu (31) et fixée à ce dernier par des bras (33) s'étendant dans un conduit d'air (12),
l'ensemble de motorisation (100) comprenant une attache moteur avant (400) fixée entre la face avant (104) du mât et le moyeu (31) et une attache moteur arrière (500) fixée entre la face inférieure (105) du mât et le carter moteur (28), l'attache moteur avant (400) comportant :
- une poutre (402) qui se fixe à la face avant (104) du mât (102) et constitue une nervure avant de celui-ci,
- une première biellette latérale (406) fixée par un point de liaison (420) à la poutre (402) et par un point de liaison (422) au moyeu (31), et
- une deuxième biellette latérale (408) fixée par deux points de liaison (424a-b) à la poutre (402) et par un point de liaison (426) au moyeu (31).

2. Ensemble de motorisation (100) selon la revendication 1, **caractérisé en ce que** pour chaque biellette latérale (406, 408), chaque point de liaison à la poutre (402) et au moyeu (31) est constitué par une chape réalisée, respectivement dans la poutre (402) et le moyeu (31), par un alésage traversant la biellette latérale (406, 408) et par un axe de cisaillement simple traversant la chape et s'emmanchant dans l'alésage à travers une liaison rotule.

3. Ensemble de motorisation (100) selon l'une quelconque des revendications 1 à 2, **caractérisé en ce que** l'attache moteur avant (400) comporte un point de liaison supplémentaire (410) entre la poutre (402) et le moyeu (31), et **en ce que** le point de liaison supplémentaire (410) prend la forme d'un point de fixation de sécurité en attente

4. Ensemble de motorisation (100) selon la revendication 3, **caractérisé en ce que** le point de liaison supplémentaire (410) est constitué d'une chape réalisée dans le moyeu (31) et d'un axe emmanché dans ladite chape, ledit axe traversant un alésage de la poutre (402) dont le diamètre est supérieur au diamètre de l'axe.

5. Ensemble de motorisation (100) selon l'une quelconque des revendications 1 à 4, **caractérisé en ce que** la fixation de la poutre (402) au mât (102) s'effectue par deux ensembles de fixation répartis de part et d'autre d'un plan longitudinal de symétrie du mât (102), **en ce que** chaque ensemble de fixation comprend deux vis de traction (452) et un pion (454), et **en ce qu'**une vis de traction (452) est disposée en partie haute de la poutre (402), une vis de traction (452) est disposée en partie basse de la poutre (402) et le pion (454) est disposé entre les vis de traction (452).

6. Ensemble de motorisation (100) selon la revendication 1, **caractérisé en ce que** l'attache moteur arrière (500) comporte :
- une ferrure (502) qui se fixe à la face inférieure (105) du mât (102),
- une biellette aval (506) fixée par un point de liaison (520) à la ferrure (502) et par deux points de liaison (522a-b) au carter moteur (28), et
- une biellette amont (508) fixée par un point de liaison (520) à la ferrure (502) et par deux points de liaison (522a-b) au carter moteur (28).

7. Ensemble de motorisation (100) selon la revendication 6, **caractérisé en ce que** pour chaque biellette (506, 508), le point de liaison (520) à la ferrure (502) est constitué par une chape réalisée dans la ferrure (502), par un alésage traversant chaque biellette (506, 508) et par un axe de cisaillement double qui traverse la chape et s'emmanche dans les alésages des biellettes (506, 508) à travers une liaison rotule, et **en ce que** pour chaque biellette (506, 508), chaque point de liaison (522a-b) au carter moteur (28) est constitué par une chape réalisée dans le carter moteur (28), par un alésage traversant chaque biellette (506, 508) et par un axe de cisaillement simple traversant la chape et s'emmanchant dans les alésages à travers une liaison rotule.

8. Ensemble de motorisation (100) selon l'une quelconque des revendications 6 à 7, **caractérisé en ce que** l'attache moteur arrière (500) comporte un point de liaison supplémentaire (510) entre les biellettes (506, 508) et le carter moteur (28), et **en ce que** le point de liaison supplémentaire (510) prend la forme d'un point de fixation de sécurité en attente.

9. Ensemble de motorisation (100) selon la revendication 8, **caractérisé en ce que** le point de liaison supplémentaire (510) est constitué d'une chape réalisée dans le carter moteur (28) et d'un axe emmanché dans ladite chape, ledit axe traversant un alésage commun aux deux biellettes (506, 508) dont le diamètre est supérieur au diamètre de l'axe.

10. Aéronef (1) comportant au moins un ensemble de motorisation (100) selon l'une des revendications précédentes.

## Patentansprüche

1. Antriebseinheit (100) für ein Flugzeug (1), wobei die Antriebseinheit (100) Folgendes umfasst:
- einen Pylon (102), der sich gemäß einer Längsachse (X) erstreckt und dazu bestimmt ist, unter einem Flügel (14) des Flugzeugs (1) befestigt zu sein, und der eine Vorderseite (104), die zu der Achse X im Allgemeinen senkrecht ist und zum vorderen Teil des Flugzeugs gerichtet ist, und eine Unterseite (105) aufweist, und
- eine Turbomaschine (10), die gemäß einer Richtung (F) eines Luftstroms, der die Turbomaschine bei deren Betrieb durchquert, von vorne nach hinten ein Gebläse (15) und einen Motor (14), der das Gebläse antreibt, beinhaltet, wobei das Gebläse (15) von einem Gebläsegehäuse (24) umschlossen ist und der Motor (14) von vorne nach hinten von einem Zwischengehäuse (30) und einem Motorgehäuse (28) umschlossen ist, wobei das Zwischengehäuse (30) eine Nabe (31) und einen Außenmantel (32), der das Gebläsegehäuse (24) verlängert, aufweist, wobei der Mantel (32) radial von der Nabe (31) beabstandet ist und an dieser durch Arme (33), die sich in einem Luftkanal (12) erstrecken, befestigt ist,
wobei die Antriebseinheit (100) eine vordere Motorbefestigung (400), die zwischen der Vorderseite (104) des Pylons und der Nabe (31) befestigt ist, und eine hintere Motorbefestigung (500), die zwischen der Unterseite (105) des Pylons und dem Motorgehäuse (28) befestigt ist, beinhaltet,
wobei die vordere Motorbefestigung (400) Folgendes umfasst:
- einen Träger (402), der an der Vorderseite (104) des Pylons (102) befestigt wird und eine vordere Rippe desselben bildet,
- eine erste Seitenstange (406), die durch einen Verbindungspunkt (420) an dem Träger (402) und durch einen Verbindungspunkt (422) an der Nabe (31) befestigt ist, und
- eine zweite Seitenstange (408), die durch zwei Verbindungspunkte (424a-b) an dem Träger (402) und durch einen Verbindungspunkt (426) an der Nabe (31) befestigt ist.

2. Antriebseinheit (100) nach Anspruch 1, **dadurch gekennzeichnet, dass** für jede Seitenstange (406, 408) jeder Verbindungspunkt mit dem Träger (402) und mit der Nabe (31) aus einem Gabelgelenk, das in dem Träger (402) bzw. in der Nabe (31) ausgeführt ist, aus einer Bohrung, die die Seitenstange (406, 408) durchquert, und aus einer Achse mit einfacher Scherung, die das Gabelgelenk durchquert und durch eine Kugelgelenkverbindung in der Bohrung verläuft, besteht.

3. Antriebseinheit (100) nach einem der Ansprüche 1 bis 2, **dadurch gekennzeichnet, dass** die vordere Motorbefestigung (400) einen zusätzlichen Verbindungspunkt (410) zwischen dem Träger (402) und der Nabe (31) umfasst und dass der zusätzliche Verbindungspunkt (410) die Rolle eines in Bereitschaft befindlichen Sicherheitsbefestigungspunkts übernimmt.

4. Antriebseinheit (100) nach Anspruch 3, **dadurch gekennzeichnet, dass** der zusätzliche Verbindungspunkt (410) aus einem Gabelgelenk, das in der Nabe (31) ausgeführt ist, und aus einer durch das Gabelgelenk verlaufenden Achse besteht, wobei die Achse eine Bohrung des Trägers (402) durchquert, deren Durchmesser größer als der Durchmesser der Achse ist.

5. Antriebseinheit (100) nach einem der Ansprüche 1 bis 4, **dadurch gekennzeichnet, dass** die Befestigung des Trägers (402) an dem Pylon (102) durch zwei Befestigungseinheiten erfolgt, die auf beiden Seiten einer symmetrischen Längsebene des Pylons (102) verteilt sind, dass jede Befestigungseinheit zwei Zugschrauben (452) und einen Stift (454) beinhaltet und dass eine Zugschraube (452) im oberen Teile des Trägers (402) angeordnet ist, eine Zugschraube (452) im unteren Teil des Trägers (402) angeordnet ist und der Stift (454) zwischen den Zugschrauben (452) angeordnet ist.

6. Antriebseinheit (100) nach Anspruch 1, **dadurch gekennzeichnet, dass** die hintere Motorbefestigung (500) Folgendes umfasst:
- einen Beschlag (502), der an der unteren Seite (105) des Pylons (102) befestigt wird,
- eine hintere Stange (506), die durch einen Verbindungspunkt (520) an dem Beschlag (502) und durch zwei Verbindungspunkte (522a-b) an dem Motorgehäuse (28) befestigt ist, und
- eine vordere Stange (508), die durch einen Verbindungspunkt (520) an dem Beschlag (502) und durch zwei Verbindungspunkte (522a-b) an dem Motorgehäuse (28) befestigt ist.

7. Antriebseinheit (100) nach Anspruch 6, **dadurch gekennzeichnet, dass** für jede Stange (506, 508) der Verbindungspunkt (520) mit dem Beschlag (502) aus einem Gabelgelenk, das in dem Beschlag (502) ausgeführt ist, aus einer Bohrung, die jede Stange (506, 508) durchquert, und aus einer Achse mit doppelter Scherung, die das Gabelgelenk durchquert und durch eine Kugelgelenkverbindung in den Bohrungen der Stangen (506, 508) verläuft, besteht, und dass für jede Stange (506, 508) jeder Verbindungspunkt (522a-b) mit dem Motorgehäuse (28) aus einem Gabelgelenk, das in dem Motorgehäuse (28) ausgeführt ist, aus einer Bohrung, die jede Stange (506, 508) durchquert, und aus einer Achse mit einfacher Scherung, die das Gabelgelenk durchquert und durch eine Kugelgelenkverbindung in den Bohrungen verläuft, besteht.

8. Antriebseinheit (100) nach einem der Ansprüche 6 bis 7, **dadurch gekennzeichnet, dass** die hintere Motorbefestigung (500) einen zusätzlichen Verbindungspunkt (510) zwischen den Stangen (506, 508) und dem Motorgehäuse (28) umfasst und dass der zusätzliche Verbindungspunkt (510) die Rolle eines in Bereitschaft befindlichen Sicherheitsbefestigungspunkts übernimmt.

9. Antriebseinheit (100) nach Anspruch 8, **dadurch gekennzeichnet, dass** zusätzliche Verbindungspunkt (510) aus einem Gabelgelenk, das in dem Motorgehäuse (28) ausgeführt ist, und aus einer in dem Gabelgelenk verlaufenden Achse besteht, wobei die Achse eine den beiden Stangen (506, 508) gemeinsame Bohrung durchquert, deren Durchmesser größer als der Durchmesser der Achse ist.

10. Flugzeug (1), das mindestens eine Antriebseinheit (100) nach einem der vorhergehenden Ansprüche umfasst.

## Claims

1. Propulsion assembly (100) for an aircraft (1), said propulsion assembly (100) having:
- a pylon (102) extending along a longitudinal axis (X) and intended to be fastened beneath a wing (14) of the aircraft (1) and having a front face (104), which is generally perpendicular to the axis X and oriented towards the front of the aircraft, and a lower face (105), and
- a turbomachine (10) comprising, from upstream to downstream in a direction (F) of a flow of air passing through the turbomachine during operation of the latter, a fan (15) and an engine (14) driving the fan, the fan (15) being faired by a fan casing (24) and the engine (14) being faired, from upstream to downstream, by an intermediate casing (30) and an engine casing (28), the intermediate casing (30) having a hub (31) and an outer shell (32) extending the fan casing (24), said shell (32) being spaced apart radially from the hub (31) and fastened to the latter by arms (33) extending in an air duct (12),
the propulsion assembly (100) comprising a front engine attachment (400) fastened between the front face (104) of the pylon and the hub (31) and a rear engine attachment (500) fastened between the lower face (105) of the pylon and the engine casing (28),
the front engine attachment (400) having:
- a beam (402) that is fastened to the front face (104) of the pylon (102) and constitutes a front rib thereof,
- a first lateral connecting rod (406) fastened to the beam (402) by a connection point (420) and to the hub (31) by a connection point (422), and
- a second lateral connecting rod (408) fastened to the beam (402) by two connection points (424a-b) and to the hub (31) by one connection point (426).

2. Propulsion assembly (100) according to Claim 1, **characterized in that**, for each lateral connecting rod (406, 408), each connection point to the beam (402) and to the hub (31) is formed by a clevis realized, in the beam (402) and the hub (31), respectively, by a bore passing through the lateral connecting rod (406, 408) and by a single shear pin passing through the clevis and fitting into the bore via a ball joint connection.

3. Propulsion assembly (100) according to either one of Claims 1 and 2, **characterized in that** the front engine attachment (400) has an additional connection point (410) between the beam (402) and the hub (31), and **in that** the additional connection point (410) takes the form of a backup safety fastening point.

4. Propulsion assembly (100) according to Claim 3, **characterized in that** the additional connection point (410) is made up of a clevis provided in the hub (31) and a pin that is fitted into said clevis, said pin passing through a bore in the beam (402), of which the diameter is greater than the diameter of the pin.

5. Propulsion assembly (100) according to any one of Claims 1 to 4, **characterized in that** the beam (402) is fastened to the pylon (102) by two fastening assemblies distributed on either side of a longitudinal plane of symmetry of the pylon (102), **in that** each fastening assembly comprises two tension bolts (452) and one peg (454), and **in that** one tension bolt (452) is disposed in the top part of the beam (402), one tension bolt (452) is disposed in the bottom part of the beam (402) and the peg (454) is disposed between the tension bolts (452).

6. Propulsion assembly (100) according to Claim 1, **characterized in that** the rear engine attachment (500) has:
- a fitting (502) that is fastened to the lower face (105) of the pylon (102),
- a downstream connecting rod (506) fastened to the fitting (502) by a connection point (520) and to the engine casing (28) by two connection points (522a-b), and
- an upstream connecting rod (508) fastened to the fitting (502) by a connection point (520) and to the engine casing (28) by two connection points (522a-b).

7. Propulsion assembly (100) according to Claim 6, **characterized in that**, for each connecting rod (506, 508), the connection point (520) to the fitting (502) is formed by a clevis realized, in the fitting (502), by a bore passing through each connecting rod (506, 508) and by a double shear pin that passes through the clevis and fits into the bores in the connecting rods (506, 508) via a ball joint connection, and **in that**, for each connecting rod (506, 508), each connection point (522a-b) to the engine casing (28) is formed by a clevis realized, in the engine casing (28), by a bore passing through each connecting rod (506, 508) and by a single shear pin passing through the clevis and fitting into the bores via a ball joint connection.

8. Propulsion assembly (100) according to either one of Claims 6 and 7, **characterized in that** the rear engine attachment (500) has an additional connection point (510) between the connecting rods (506, 508) and the engine casing (28), and **in that** the additional connection point (510) takes the form of a backup safety fastening point.

9. Propulsion assembly (100) according to Claim 8, **characterized in that** additional connection point (510) is made up of a clevis provided in the engine casing (28) and a pin that is fitted into said clevis, said pin passing through a bore common to the two connecting rods (506, 508), of which the diameter is greater than the diameter of the pin.

10. Aircraft (1) having at least one propulsion assembly (100) according to one of the preceding claims.
